# FASCICULE DE BREVET EUROPEEN

(11) **EP 1 375 855 B1**
(45) Date de publication et mention de la délivrance du brevet: **25.10.2006**
(21) Numéro de dépôt: 03291551.4
(22) Date de dépôt: 24.06.2003
(51) Int. Cl.: F01N 7/08, F41H 3/00, F01N 3/05

(54) **Dispositif de réduction de la signature visible et infrarouge d'un véhicule militaire**
Vorrichtung zur Verringerung der sichtbaren und Infrarotstrahlungssignatur eines Militärfahrzeugs
Device for reducing the infrared and visible signature of a military vehicle

(30) Priorité: 28.06.2002 FR 0208062
(43) Date de publication de la demande: 02.01.2004
(73) Titulaire: GIAT Industries, 78000 Versailles (FR)
(72) Inventeur: Jacquemont, Jacky, 91430 Igny (FR); Poirmeur, Xavier, 78280 Guyancourt (FR)
(74) Mandataire: Célanie, Christian

(56) Documents cités:
- DE-A- 3 221 378
- DE-B- 1 099 799
- FR-A- 2 776 705
- US-A- 4 535 862
- US-A- 6 102 791
- US-B1- 6 182 440

## Description

Le secteur technique de la présente invention est celui des dispositifs destinés à réduire les signatures visible et infrarouge des véhicules militaires, au niveau de leur gaz d'échappement et de refroidissement.

L'évolution de la technologie des caméras et capteurs thermiques permet de détecter à de très grandes distances des sources chaudes dans l'environnement terrestre, tels des gaz d'échappement et de refroidissement du moteur d'un véhicule. Pour améliorer la furtivité face à l'évolution des capteurs infrarouges, il devient donc nécessaire de réduire le niveau d'énergie rayonnée par les flux d'échappement et de refroidissement des véhicules militaires.

Dans le brevet FR-2 776 705 on propose déjà un dispositif efficace de dilution uniforme des gaz d'échappement d'un véhicule militaire. L'air est refroidi dans une aire de refroidissement puis rejeté vers l'extérieur par une sortie munie de persiennes. Ce dispositif présente cependant un inconvénient majeur. En effet, si le cahier des charges impose des performances balistiques élevées, les persiennages deviennent difficiles à réaliser dans des épaisseurs cohérentes avec l'architecture du véhicule. A contrario, si on cherche à minimiser la masse du persiennage, c'est au détriment de la protection balistique du véhicule. Un autre inconvénient réside dans le fait que les flux d'échappement et de refroidissement du moteur sont souvent distincts et possèdent leur propre système d'évacuation, ce qui multiplie les persiennages, donc les zones vulnérables du véhicule.

Le brevet DE 32 21 378 décrit un dispositif de réduction de la signature visible et infrarouge d'un véhicule militaire. Ce dispositif est composé d'une enceinte assurant le mélange des gaz d'échappement et de l'air de refroidissement du moteur. Le fond de l'enceinte est muni d'ouvertures afin de permettre l'évacuation des gaz refroidis. Un tel dispositif présente cependant un inconvénient majeur. En effet, malgré la dilution, les gaz éjectés demeurent relativement chauds, ce qui risque d'une part de laisser une trace infrarouge au sol, et d'autre part d'embraser les végétaux situés sous le véhicule. Ce risque est particulièrement élevé lorsque le moteur du véhicule fonctionne alors que celui-ci est à l'arrêt. De plus, le flux de gaz rejetés risque de créer un nuage de poussière, ce qui nuit considérablement à la furtivité du véhicule. De plus les ouvertures d'évacuation des gaz risquent d'être obturées par la boue lors de passages de gués ou sur terrain boueux. De plus, un tel dispositif présente l'inconvénient d'être disposé à l'intérieur de la caisse du véhicule, ce qui nécessite le démontage de la caisse du véhicule en cas d'intervention ou de remplacement du dispositif.

Le brevet US 4 535 862 décrit un dispositif de refroidissement d'un moteur d'un véhicule. Dans ce dispositif, l'air de refroidissement du moteur du véhicule est mélangé dans une chambre de refroidissement avec les gaz d'échappement du moteur, issus du pot, puis évacué par une sortie. Le pot d'échappement du moteur est directement disposé dans la chambre de refroidissement. Le but recherché est de refroidir l'échappement puis d'entraîner les gaz vers l'extérieur. Il n'est pas question dans ce document de diluer les gaz de façon homogène. De plus, un tel dispositif présente également l'inconvénient d'être disposé à l'intérieur de la caisse du véhicule, ce qui nécessite le démontage de la caisse du véhicule en cas d'intervention ou de remplacement du dispositif.

Afin de pallier ces problèmes de masse et de volume, voire de perte de protection, il est nécessaire de rechercher des solutions techniques qui limitent le nombre de persiennes.

Le but de l'invention est justement d'améliorer la furtivité d'un véhicule militaire en réalisant un masquage de la zone d'émission, tout en conservant une protection balistique la plus efficace possible.

La présente invention a donc pour objet un dispositif de réduction de la signature visible et infrarouge d'un véhicule militaire par dilution des gaz d'échappement et de l'air de refroidissement de son moteur, et comprenant un caisson recevant les deux sources de fluides chauds pour assurer une sortie unique des gaz d'échappement et de l'air de refroidissement, caisson constitué d'une enceinte et d'un persiennage disposé au niveau de sa paroi latérale externe, dispositif caractérisé en ce que le caisson est disposé au niveau d'un espace libre à l'arrière ou latéralement à la caisse du véhicule et séparé de la caisse par une plaque de blindage afin d'être démontable indépendamment de la caisse du véhicule.

Selon une autre caractéristique de l'invention, le caisson est muni d'un silencieux et d'un moyen de dilution connectés à l'échappement du véhicule.

Selon encore une autre caractéristique de l'invention, le persiennage est réalisé de manière à assurer une protection balistique.

Une application de l'invention consiste à placer la sortie d'air du dispositif de dilution sous le déport entre deux essieux du véhicule du type à roues.

Avantageusement, le système d'échappement selon l'invention permet de réaliser un mélange homogène en température des gaz d'échappement refroidis et de l'air de ventilation sans générer un trou de protection balistique.

Un autre avantage réside dans le fait que la protection balistique du véhicule et l'évacuation de l'air sont indépendantes.

Un autre avantage réside dans le fait que, même lors des accélérations du véhicule, le panache de fumée et de chaleur est diluée, ce qui permet de diminuer la détectabilité du véhicule sans réduire ses performances.

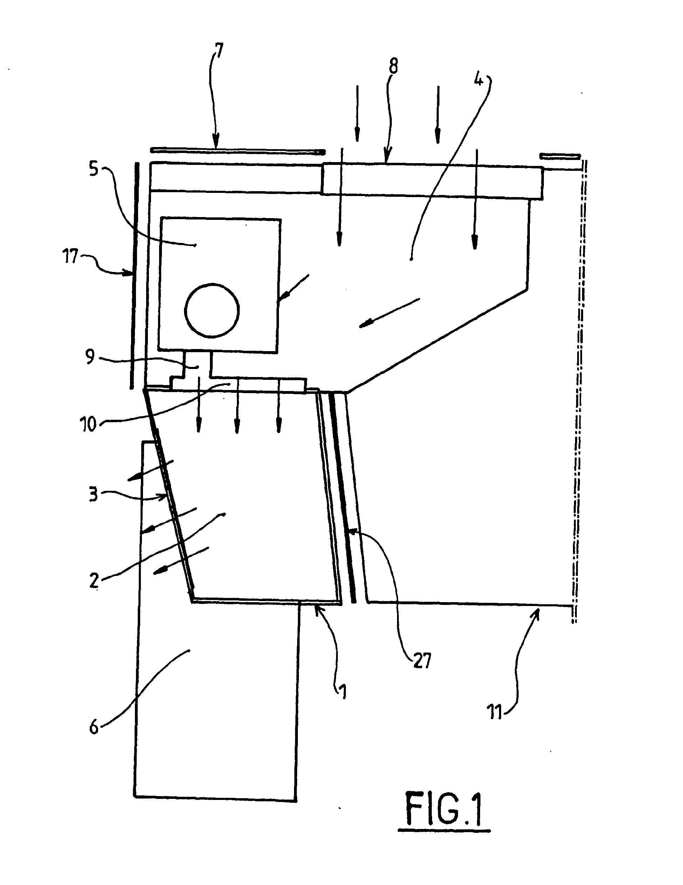

D'autres caractéristiques, détails et avantages de l'invention ressortiront plus clairement de la description donnée ci-après à titre indicatif en relation avec un dessin où la figure 1 est une coupe schématique arrière représentant la partie arrière gauche de la caisse d'un véhicule militaire muni du dispositif selon l'invention.

L'invention est destinée aux véhicules militaires exposés à des agressions balistiques. On prendra pour illustrer l'application de l'invention un véhicule de combat du type véhicule blindé équipé de roues. Ce véhicule est équipé d'un moteur à combustion (moteur diesel par exemple). Ce type de moteur produit une chaleur importante, un système de refroidissement du moteur est donc prévu pour éviter une surchauffe du moteur. C'est en particulier la partie arrière gauche de la caisse 11 de ce véhicule qui est schématiquement représentée sur la figure 1. Le caisson de dilution 1 est disposé à l'arrière de la caisse 11 du véhicule militaire.

Le caisson de dilution 1 se présente globalement sous la forme d'un parallélépipède situé dans un espace libre, cet espace pouvant, par exemple, se trouver à l'arrière du véhicule, entre deux roues, derrière le dernier pneumatique 6, ou éventuellement, lorsqu'il s'agit d'un véhicule à chenilles, entre deux galets de train de roulement. Il est composé d'une enceinte 2 et d'un persiennage 3 au niveau de la paroi latérale externe. L'enceinte 2 communique avec deux sources de fluides chauds : les gaz d'échappement du véhicule et l'air de refroidissement du moteur. Les gaz d'échappement sont évacués du moteur par l'échappement 5, puis ils passent par un silencieux 9 et par un moyen de dilution 10 avant d'arriver dans l'enceinte 2. Le rôle du silencieux 9 est d'atténuer le bruit issu du moteur. Dans le moyen de dilution 10, un mélange des gaz d'échappement s'effectue avec de l'air frais, afin de faire baisser la température de ces gaz.

L'air assurant le refroidissement du moteur et des autres composants provient de l'extérieur et pénètre dans une enceinte de refroidissement 4 par un persiennage balistique 8 disposé sur la paroi supérieure de la caisse du véhicule 11. Dans cette enceinte de refroidissement 4 se trouvent les composants à refroidir qui peuvent être par exemple le moteur du véhicule ou des ailettes de refroidissement en contact avec des éléments à température élevée (non représentés sur le schéma). L'air de refroidissement du moteur est ensuite évacué vers le caisson de dilution 1. Les gaz d'échappement et l'air de refroidissement du moteur se mélangent dans l'enceinte 2 avant d'être évacués par le persiennage 3. Le persiennage 3, ainsi que l'ensemble du caisson de dilution 1 peut comporter un blindage léger, mais ce blindage n'est pas impératif. En effet, le caisson en lui-même ne contient pas d'éléments essentiels assurant le bon fonctionnement du véhicule. S'il est détruit, le véhicule sera toujours en mesure de fonctionner, mais perdra une partie de sa discrétion, ce qui ne présente pas d'inconvénient majeur. A partir du moment où il a fait l'objet d'une agression par un projectile, cela signifie qu'il a déjà été repéré. Le véhicule 11 en lui-même possède un blindage 7 habituellement utilisé sur ce type de véhicule. Un blindage 27 assure une protection entre la caisse du véhicule et le caisson de dilution 1. Un blindage 17 remplace les anciens persiennages d'évacuation qui étaient placés au niveau de la paroi extérieure du véhicule afin de compléter et d'améliorer la protection du véhicule.

Les anciens persiennages sont remplacés par un blindage normal offrant une protection balistique équivalente aux autres parties du véhicule. On voit donc tout l'intérêt de l'invention qui permet d'effacer un trou de protection balistique présent dans le véhicule.

En cas de destruction du caisson 1, celui-ci est facilement remplacé sans que l'intervention ne nécessite le démontage de la caisse du véhicule.

Dans le cas où l'invention est appliquée à un véhicule chenillé, l'enceinte 2 peut être disposée au voisinage du barbotin, en avant ou en arrière de celui-ci, sans modifications importantes du principe décrit tout en conservant les avantages de l'invention.

## Revendications

1. Dispositif de réduction de la signature visible et infrarouge d'un véhicule militaire par dilution des gaz d'échappement et de l'air de refroidissement de son moteur, et comprenant un caisson (1) recevant les deux sources de fluides chauds pour assurer une sortie unique des gaz d'échappement et de l'air de refroidissement, caisson constitué d'une enceinte (2) et d'un persiennage (3) disposé au niveau de sa paroi latérale externe, dispositif ***caractérisé en ce que*** le caisson (1) est disposé au niveau d'un espace libre à l'arrière ou latéralement à la caisse (11) du véhicule et séparé de la caisse (11) par une plaque de blindage (27) afin d'être démontable indépendamment de la caisse du véhicule.

2. Dispositif de réduction de la signature visible et infrarouge d'un véhicule selon la revendication 1, **caractérisé en ce que** le caisson (1) est muni d'un silencieux (9) et d'un moyen de dilution (10) connectés à l'échappement (5) du véhicule.

3. Dispositif de réduction de la signature visible et infrarouge d'un véhicule selon une des revendications 1 ou 2, **caractérisé en ce que** le persiennage (3) est réalisé de manière à assurer une protection balistique.

4. Application du dispositif de réduction de la signature visible et infrarouge d'un véhicule selon une des revendications précédentes, **caractérisé en ce que** la sortie d'air se fait latéralement par un caisson (1) disposé sous un déport disposé entre deux essieux du véhicule du type à roues.

## Claims

1. A device to reduce the visible and infrared signature of a military combat vehicle by diluting the exhaust gases the engine cooling air, comprising a caisson (1) receiving both fluids to ensure a single outlet for both the exhaust gases and the cooling aire, said caisson (1) being constituted by an enclosure (2) and shuttering (3) at its external lateral wall, **characterised in that** the caisson (1) is placed in a free space at the rear or laterally to the body (11) of the vehicle and separated from the body (11) by an armour plating (27) in order to be disassembled independently from the body of the vehicle.

2. A device to reduce the visible and infrared signature of a vehicle according to Claim 1, **characterised in that** the caisson (1) is fitted with a silencer (9) and dilution means (10) connected to the vehicle's exhaust system (5).

3. A device to reduce the visible and infrared signature of a vehicle according to one of Claims 1 and 2, wherein the shuttering is made such as to ensure the effective ballistic protection of the device.

4. Application of the device to reduce the visible and infrared signature of a vehicle according to one of the above Claims, wherein the air outlet is positioned under the offset between the axles of a wheeled-type vehicle.

## Patentansprüche

1. Vorrichtung zur Verminderung der Signatur im sichtbaren und infraroten Bereich eines militärischen Fahrzeuges durch Verdünnung der Auspuffgase und der Kühlluft seines Motors und umfassend einen Behälter (1), der die zwei Quellen mit heißem Fluid aufnimmt, um einen einzigen Austritt von Auspuffgas und Kühlluft zu gewährleisten, wobei der Behälter von einem Gehäuse (2) und einer im Bereich seiner äußeren, seitlichen Wand eingerichteten Anordnung von Kühlschlitzen (3) gebildet wird, wobei die Vorrichtung **dadurch *gekennzeichnet ist, dass*** der Behälter (1) im Bereich eines freien Raumes am hinteren Ende oder seitlich des Aufbaues (11) des Fahrzeuges und durch eine Panzerplatte (27) von dem Aufbau (11) getrennt angeordnet ist, um unabhängig vom Aufbau des Fahrzeuges demontierbar zu sein.

2. Vorrichtung zur Verminderung der Signatur im sichtbaren und infraroten Bereich eines Fahrzeuges nach Anspruch 1, **dadurch gekennzeichnet, dass** der Behälter (1) mit einem Schalldämpfer (9) und einem Mittel zum Verdünnen (10) ausgerüstet ist, die mit dem Auspuff (5) des Fahrzeugs verbunden sind.

3. Vorrichtung zur Verminderung der Signatur im sichtbaren und infraroten Bereich eines Fahrzeuges nach einem der Ansprüche 1 oder 2, **dadurch gekennzeichnet, dass** die Anordnung von Kühlschlitzen (3) in der Weise bewerkstelligt wird, dass ein ballistischer Schutz gewährleistet wird.

4. Anwendung der Vorrichtung zur Verminderung der Signatur im sichtbaren und infraroten Bereich eines Fahrzeuges nach einem der vorhergehenden Ansprüche, **dadurch gekennzeichnet, dass** der Luftaustritt durch einen Behälter (1), der unter einem Versatz zwischen zwei Achsen des Fahrzeuges mit Rädern angeordnet ist, seitlich bewerkstelligt wird.
